**Europäisches Patentamt**

**European Patent Office**

**Office européen des brevets**

(19)

(11) Veröffentlichungsnummer: **0 124 610**
**B1**

(12)

# EUROPÄISCHE PATENTSCHRIFT

(45) Veröffentlichungstag der Patentschrift:
06.08.86

(51) Int. Cl.⁴: **B 60 H 1/32,** F 25 D 7/00

(21) Anmeldenummer: **84900399.1**

(22) Anmeldetag: **28.10.83**

(86) Internationale Anmeldenummer:
**PCT/EP 83/00282**

(87) Internationale Veröffentlichungsnummer:
**WO 84/01749 (10.05.84 Gazette 84/12)**

(54) **VORRICHTUNG ZUR KÜHLUNG VON FAHRZEUGINNENRÄUMEN.**

(30) Priorität: **28.10.82 IT 484982**

(43) Veröffentlichungstag der Anmeldung:
**14.11.84 Patentblatt 84/46**

(45) Bekanntmachung des Hinweises auf die Patenterteilung:
**06.08.86 Patentblatt 86/32**

(84) Benannte Vertragsstaaten:
**AT BE CH DE FR GB LI LU NL SE**

(56) Entgegenhaltungen:
**GB - A - 455 874**
**GB - A - 1 381 775**
**US - A - 1 808 829**
**US - A - 2 151 097**
**US - A - 2 552 819**
**US - A - 2 625 425**
**US - A - 2 767 638**
**US - A - 4 150 551**
**US - A - 4 342 203**

(73) Patentinhaber: **EBNER, Anneliese, Rennstallweg 41,
I-39012 Meran (IT)**
Patentinhaber: **KRANAUER, Erwin, Rennstallweg 41,
I-39012 Meran (IT)**

(72) Erfinder: **EBNER, Anneliese, Rennstallweg 41,
I-39012 Meran (IT)**
Erfinder: **KRANAUER, Erwin, Rennstallweg 41,
I-39012 Meran (IT)**

(74) Vertreter: **Bauer, Robert, Dipl.-Ing., Boeters, Bauer &
Partner Patentanwälte Thomas-Wimmer-Ring 14,
D-8000 München 22 (DE)**

EP 0 124 610 B1

**Beschreibung**

Die Erfindung bezieht sich auf eine Vorrichtung zur aussenseitigen Kühlung von Fahrzeuginnenräumen jeder Art durch Entzug von Verdunstungswärme unter der Einwirkung des Fahrtwindes, wie es im Oberbegriff des Anspruchs 1 angegeben ist. Eine solche Vorrichtung ist aus der DE-C-887010 schon bekannt.

Eine derartige Vorrichtung soll bei intensiver Sonneneinstrahlung und/oder hoher Aussentemperatur die Temperatur in dem betreffenden Fahrzeuginnenraum in erträglichen bzw. zuträglichen Grenzen halten.

Es sind Kühleinrichtungen für Fahrzeuge bekannt, die in einem thermodynamischen Kreisprozess mit Hilfe von Kompressoren oder Absorbern arbeiten. Sie sind technisch wie energiewirtschaftlich aufwendig und entsprechend teuer. Des weiteren sind aus der DE-C-887010, der DE-A-2528507 sowie den deutschen Gebrauchsmustern 1926094 und 7623373 Vorrichtungen für die Kühlung von Fahrzeuginnenräumen bekannt, bei denen das Prinzip des Wärmeentzugs durch Verdunstung einer Flüssigkeit unter der Einwirkung des Fahrtwindes ausgenutzt wird. Während bei einer Art dieser Kühlvorrichtungen in den Fahrzeuginnenraum gekühlte Luft eingeblasen und bei einer anderen eine gekühlte Flüssigkeit durch im Fahrzeuginnenraum angeordnete Radiatoren geleitet wird, findet bei einer dritten Art eine auf das Dach oder auch eine Wand des Fahrzeuginnenraumes aufgelegte und, ggf. aus einem Reservoir mit der zu verdunstenden Flüssigkeit, i.a. Wasser, getränkte Matte Verwendung, die aussenseitig vom Fahrtwind bestrichen wird, um so dem Dach bzw. der Wand durch die Verdunstung Wärme zu entziehen.

Obwohl gerade die letztgenannte Ausführung einfach ist und ohne Energieaufwand auskommt, hat sie doch bislang Mängel, die ihrer Verbreitung im Wege standen. So muss die Matte entweder verhältnismässig dick sein, um selbst einen genügenden Wasservorrat aufzunehmen, oder sie befindet sich über dem betreffenden, flächenhaften Reservoir. In beiden Fällen ist der Wärmeübertritt zu der Verdunstungsfläche sehr behindert, zumal unterseitig eine − zur Ermöglichung eines Anschmiegens an die Dach- bzw. Wandform gewöhnlich aus Kunststoff bestehende − wasserundurchlässige Schicht oder Wanne erforderlich ist.

Hier soll die Erfindung Abhilfe schaffen. Die in dem Anspruch 1 angegebene Erfindung löst demzufolge die Aufgabe, eine Vorrichtung zur Kühlung von Fahrzeuginnenräumen zu schaffen, die technisch wie bedienungsmässig einfach ist, abgesehen vom Fahrtwind und der abzuführenden Wärme ohne Energiezufuhr sowie über grössere Fahrtstrecken ohne Nachfüllung auskommt, dabei aber leistungsfähig ist.

Die durch die Erfindung erreichten Vorteile sind im wesentlichen darin begründet, dass die betreffende Matte bei geringer Wandstärke unmittelbar und satt an dem Dach bzw. einer Wand der Fahrzeugkabine anliegen kann, wodurch ein guter und praktisch verzögerungsfreier Wärmeübergang gewährleistet ist, dass die Matte aber dennoch in ausreichendem Masse und über einen längeren Zeitraum aus einem Vorratsbehälter mit der zu verdunstenden Flüssigkeit speisbar ist.

Besondere Ausführungsarten der Erfindung sind in den abhängigen Ansprüchen angegeben.

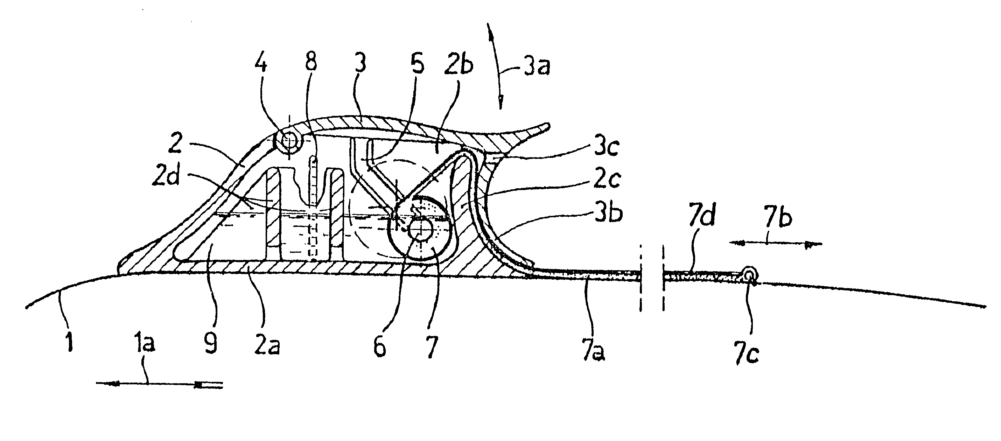

Im folgenden wird die Erfindung anhand eines in der Zeichnung dargestellten Ausführungsbeispiels erläutert.

Die einzige Figur der Zeichnung zeigt einen vertikalen Schnitt durch die betreffende, in diesem Falle auf dem Dach einer Fahrzeugkabine angebrachte Vorrichtung in Längsrichtung des Fahrzeugs.

Auf dem Dach 1 des in Richtung des Pfeiles 1a fahrenden Fahrzeugs ist quer zur Fahrtrichtung ein leistenförmiger Behälter 2 angebracht, beispielsweise nach Art eines Skiträgers befestigt, dessen Boden 2a zumindest an seiner Vorder- und/oder Hinterkante dicht an dem Dach 1 anliegt. Dazu kann dieser Boden 2a zumindest an der betreffenden Kante oder aber − vorzugsweise − der Behälter 2 als Ganzes elastisch verformbar sein. Die dichte Anlage hat den Zweck, dass der Fahrtwind ausschliesslich über den Behälter 2 hinwegstreichen kann, der im übrigen etwa das Profil eines sog. Spoilers hat.

Der Behälter 2 hat einen sich im wesentlichen über seine gesamte Länge erstreckenden Deckel 3, der in Richtung des Pfeiles 3a um ein Scharnier 4 schwenkbar ist. Im Inneren des Behälters 2 befindet sich innerhalb einer seitlichen Führung 5 ein springrouleauartiger Aufwickelmechanismus 6 für eine Rolle 7 einer Matte 7a aus saugfähigem Material, wie z.B. einem Gewebe, einem Gewirk, einem Vlies oder Filz oder auch einem Schaumstoff. Erforderlichenfalls wird die Matte zugleich in zwei Koordinaten flexibel, d.h. dehnbar sein. An zumindest einer Stirnwand, 2b, des Behälters 2 ist ein Schauglas 8 vorgesehen, durch welches das Niveau der in dem Behälter gespeicherten Verdunstungsflüssigkeit 9, i.a. Wasser, ablesbar ist.

Die Rolle 7 taucht in die Flüssigkeit 9 ein. Von ihr kann die Matte 7a über eine rippenförmige Wand 2c des Behälters 2 hinweg und unter einer Lippe 3b des Deckels 3 hindurch entlang dem Dach 1 in Richtung des Pfeiles 7b nach aussen gezogen werden. An ihrem Ende weist die Matte 7a einen Verstärkungswulst 7c auf, der am Dach 1 festgeschnallt werden kann und die Anlage der Matte 7a am Dach sichert. Im Bedarfsfall kann die Matte auch seitlich am Dach, ggf. über ähnliche Verstärkungswülste, festschnallbar sein. Entsprechende Befestigungsmittel sind wiederum von Skiträgern oder dergl. bekannt. Bemerkenswert ist, dass der sich hinter dem Behälter 2 einstellende Überdruck infolge Strömungsverzögerung die Anlage der Matte 7a an dem Dach 1 noch unterstützt, wodurch selbst bei stark gewölbten Dächern und hoher Fahrtgeschwindigkeit eine allerorts sichere Anlage der Matte gewährleistet ist.

Die Matte 7a saugt aus dem Inneren des Behälters 2 Flüssigkeit 9 an, mit der sie sich infolge Kapilarwirkung bis zum Ende tränkt. Durch das Adhäsionsbestreben der Flüssigkeit wird die Anlage der Matte 7a an dem Dach 1 noch weiter begünstigt. Durch den unmittelbaren Kontakt der Verdunstungsflüssigkeit mit dem Dach und die geringe erforderliche Dicke der Matte 7a teilt sich die Verdunstungskälte von der vom Fahrtwind bestrichenen Mattenoberfläche praktisch unmittelbar dem Dach mit.

Zur Begünstigung der Versogung der Matte 7a mit der Flüssigkeit aus dem Behälter 2 kann der Behälter oder wie gezeigt, der Deckel 3 Belüftungsöffnungen 3c aufweisen, durch die der Fahrtwind im Behälter einen Überdruck hervorruft. Zudem können in oder auf der Matte 7a die Flüssigkeitsverteilung unterstützende Adern 7d vorgesehen sein. Zur Dämpfung der durch Zentrifugal- und Trägheitskräfte im Behälterinneren hervorgerufenen Flüssigkeitsbewegungen kann der Behälter 2 Einbauten 2d aufweisen.

Selbstverständlich sind mancherlei Abwandlungen von dem hier beschriebenen und dargestellten Ausführungsbeispiel möglich. So kann etwa an die Stelle des Scharniers 4 ein Filmgelenk treten und dergl. mehr.

## Patentansprüche

1. Vorrichtung zur aussenseitigen Kühlung von Fahrzeuginnenräumen durch Entzug von Verdunstungswärme aus einer an dem Dach (1) oder einer Wand des Fahrzeugs entlanglaufenden, vom Fahrtwind bestrichenen und aus einem Vorratsbehälter (2) mit einer Verdunstungsflüssigkeit (9) getränkten Matte (7a), dadurch gekennzeichnet, dass der Vorratsbehälter (2) als dicht anliegend quer zur Fahrtrichtung an dem Dach (1) bzw. der betreffenden Wand des Fahrzeugs anbringbare, leistenförmige Kammer ausgebildet ist, aus der die Matte (7a) längs einer untenliegenden Längskante nach aussen hervortritt.

2. Vorrichtung nach Anspruch 1, dadurch gekennzeichnet, dass die Matte (7a) von einer in dem Vorratsbehälter (2) befindlichen Rolle (7) abziehbar ist.

3. Vorrichtung nach Anspruch 2, dadurch gekennzeichnet, dass die Rolle (7) auf einem springrouleauartigen Aufwickelmechanismus (6) angeordnet ist.

4. Vorrichtung nach Anspruch 2 oder 3, dadurch gekennzeichnet, dass die Rolle (7) bzw. der Aufwickelmechanismus (6) in seitlichen Führungen (5) des Vorratsbehälters (2) auf- und abbeweglich gelagert ist.

5. Vorrichtung nach einem der vorhergehenden Ansprüche, dadurch gekennzeichnet, dass der Vorratsbehälter (2) einen – vorzugsweise sich im wesentlichen über die gesamte Länge des Vorratsbehälters erstreckenden und scharnierartig angelenkten – Deckel (3) aufweist.

6. Vorrichtung nach einem der vorhergehenden Ansprüche, dadurch gekennzeichnet, dass der Vorratsbehälter (2) etwa spoilerartig profiliert ist.

7. Vorrichtung nach einem der vorhergehenden Ansprüche, dadurch gekennzeichnet, dass der Vorratsbehälter an mindestens einer Stelle, die unter dem Einfluss des Fahrtwinds einen Überdruck erwarten lässt, mindestens eine Belüftungsöffnung (3c) aufweist.

8. Vorrichtung nach einem der vorhergehenden Ansprüche, dadurch gekennzeichnet, dass die Matte (7a) aus dem Vorratsbehälter (2) über eine rippenförmige Wand (2c) hinweg nach aussen geführt ist.

9. Vorrichtung nach einem der vorhergehenden Ansprüche, dadurch gekennzeichnet, dass der Vorratsbehälter (2) die Bewegung der Flüssigkeit (9) in seinem Inneren dämpfende Einbauten (2d) aufweist.

10. Vorrichtung nach einem der vorhergehenden Ansprüche, dadurch gekennzeichnet, dass zumindest der Boden (2a) des Vorratsbehälters (2) und zumindest an seinen längsverlaufenden Kanten aus elastischem Material besteht.

11. Vorrichtung nach einem der vorhergehenden Ansprüche, dadurch gekennzeichnet, dass die Matte (7a) in zwei Koordinaten zugleich flexibel ist.

12. Vorrichtung nach einem der vorhergehenden Ansprüche, dadurch gekennzeichnet, dass die Matte (7a) im wesentlichen aus einem Gewebe, einem Gewirk, einem Vlies, einem Filz oder einem Schaumstoff besteht.

13. Vorrichtung nach einem der vorhergehenden Ansprüche, dadurch gekennzeichnet, dass die Matte (7a) die Flüssigkeitsverteilung begünstigende Adern (7d) aufweist.

14. Vorrichtung nach einem der vorhergehenden Ansprüche, dadurch gekennzeichnet, dass die Matte (7a) an ihrem freien Ende und/oder an ihren Seitenkanten eine Verstärkung (7c) aufweist.

15. Vorrichtung nach einem der vorhergehenden Ansprüche, dadurch gekennzeichnet, dass der Vorratsbehälter (2) und/oder die Matte (7a) an das Dach (1) bzw. die Wand anklemmbar oder anschnallbar ist.

## Claims

1. Device for external cooling of vehicle interiors by withdrawing heat of evaporation from a mat (7a) which extends along the roof (1) or a wall of the vehicle, the relative wind sweeping over said mat and said mat being impregnated with an evaporation liquid (9) from a reservoir (2), characterized in that the reservoir (2) is constructed as strip-shaped chamber which is adapted to be attached in close engagement transversely of the travelling direction to the roof (1) or the respective wall of the vehicle and out of which the mat (7a) projects outwardly along a lower longitudinal edge.

2. Device according to claim 1, characterized in that the mat (7a) is adapted to be withdrawn from a roll (7) disposed in the reservoir (2).

3. Device according to claim 2, characterized in that the roll (7) is disposed on a spring-blind-like coiling mechanism (6).

4. Device according to claim 2 or 3, characterized in that the roll (7) or the coiling mechanism (6) is mounted reciprocal up and down in lateral guides (5) of the reservoir (2).

5. Device according to any one of the preceding claims, characterized in that the reservoir (2) comprises a cover (3) preferably extending substantially over the entire length of the reservoir and articulately connected in hingelike manner.

6. Device according to any one of the preceding claims, characterized in that the reservoir (2) is profiled substantially in the manner of a spoiler.

7. Device according to any one of the preceding claims, characterized in that the reservoir comprises at least one ventilation opening (3c) at at least one point where an excess pressure is to be expected under the influence of the relative wind.

8. Device according to any one of the preceding claims, characterized in that the mat (7a) is led outwardly from the reservoir (2) over a rib-shaped wall (2c).

9. Device according to any one of the preceding claims, characterized in that the reservoir (2) comprises fittings (2d) damping the movement of the liquid (9) in its interior.

10. Device according to any one of the preceding claims, characterized in that at least the bottom (2a) of the reservoir (2) consists at least at its longitudinally extending edges of resilient material.

11. Device according to any one of the preceding claims, characterized in that the mat (7a) is flexible at the same time in two coordinates.

12. Device according to any one of the preceding claims, characterized in that the mat (7a) consists essentially of a woven fabric, a knitted fabric, a non-woven fabric, a felt or a foam material.

13. Device according to any one of the preceding claims, characterized in that the mat (7a) comprises veins (7d) promoting the liquid distribution.

14. Device according to any one of the preceding claims, characterized in that the mat (7a) comprises at its free end and/or at its side edges a reinforcement (7c).

15. Device according to any one of the preceding claims, characterized in that the reservoir (2) and/or the mat (7a) is adapted to be clamped, clipped or strapped to the roof (1) or the wall.

## Revendications

1. Dispositif pour refroidir de l'extérieur les espaces intérieurs de véhicules en évacuant de la chaleur d'évaporation d'un tapis (7a) s'étendant le long du toit (1) ou d'une paroi de véhicule, balayé par le courant d'air créé par le véhicule en déplacement et alimenté en un liquide d'évaporation (9) à partir d'un réservoir (2), caractérisé en ce que le réservoir (2) est constitué par une chambre ayant la forme d'une baguette pouvant être montée, transversalement à la direction de déplacement, sur le toit (1) ou ladite paroi du véhicule en épousant de près leur forme, le tapis (7a) sortant vers l'extérieur par un bord longitudinal inférieur.

2. Dispositif selon la revendication 1, caractérisé en ce que le tapis (7a) peut être déroulé à partir d'un tambour (7) situé dans le réservoir (2).

3. Dispositif selon la revendication 2, caractérisé en ce que le tambour (7) est monté sur un mécanisme d'enroulement (6) du genre store à enroulement automatique.

4. Dispositif selon la revendication 2 ou 3, caractérisé en ce que le tambour (7), respectivement le mécanisme d'enroulement (6), est placé dans des guidages latéraux (5) du réservoir (2), de manière à pouvoir se déplacer vers le haut et le bas.

5. Dispositif selon l'une des revendications précédentes, caractérisé en ce que le réservoir (2) comprend un couvercle (3) s'étendant de préférence sur toute la longueur du réservoir et relié à celui-ci par une articulation ou analogue.

6. Dispositif selon l'une des revendications précédentes, caractérisé en ce que le réservoir (2) a sensiblement le profil d'un spoiler.

7. Dispositif selon l'une des revendications précédentes, caractérisé en ce que le réservoir présente au moins à un emplacement où l'on peut s'attendre à un excès de pression sous l'influence du courant d'air créé par le véhicule en déplacement, au moins une ouverture d'aération (3c).

8. Dispositif selon l'une des revendications précédentes, caractérisé en ce que le tapis (7a) est tiré vers l'extérieur à partir du réservoir (2) en passant par une paroi ayant la forme d'une nervure (2c).

9. Dispositif selon l'une des revendications précédentes, caractérisé en ce que le réservoir (2) contient des chicanes (2d) amortissant le mouvement du liquide (9) dans l'intérieur.

10. Dispositif selon l'une des revendications précédentes, caractérisé en ce qu'au moins le fond (2a) du réservoir (2) est, au moins le long de ses bords longitudinaux, fabriqué en matière plastique.

11. Dispositif selon l'une des revendications précédentes, caractérisé en ce que le tapis (7a) est élastique suivant deux coordonnées à la fois.

12. Dispositif selon l'une des revendications précédentes, caractérisé en ce que le tapis (7a) est essentiellement tissé, en mailles, en fibres non tissées, en feutre ou en mousse.

13. Dispositif selon l'une des revendications précédentes, caractérisé en ce que le tapis (7a) contient des veines (7d) favorisant la répartition du liquide.

14. Dispositif selon l'une des revendications précédentes, caractérisé en ce que le tapis (7a) possède à son extrémité libre et/ou à ses bords latéraux un renforcement (7c).

15. Dispositif selon l'une des revendications précédentes, caractérisé en ce que le réservoir (2) et/ou le tapis (7a) peuvent être fixés par des sangles ou mâchoires sur le toit (1) ou la paroi.